# DEMANDE DE BREVET EUROPEEN

(11) **EP 1 947 485 A1**
(43) Date de publication de la demande: **23.07.2008**
(21) Numéro de dépôt: 08103189.0
(22) Date de dépôt: 20.09.2000
(51) Int. Cl.: G02B 1/10, C03C 17/36, B32B 15/20, B32B 33/00, G02B 5/26, G02B 5/28, C03C 17/34

(54) **Vitrage muni d'un empilement de couches minces agissant sur le rayonnement solaire**

(30) Priorité: 23.09.1999 FR 9911877
(62) Demande divisionnaire de: 00964324.8
(71) Demandeur: SAINT-GOBAIN GLASS FRANCE, 92400 Courbevoie (FR)
(72) Inventeur: Coustet, Valérie, 95160 Montmorency (FR); Gentilhomme, Carole, 93600 Aulnay sous Bois (FR)
(74) Mandataire: Colombier, Christian

(57) **Abrégé**

L'invention a pour objet un substrat transparent muni d'un empilement de couches minces agissant sur le rayonnement solaire. L'empilement comprend une couche fonctionnelle en molybdène, et une surcouche en nitrure ou oxynitrure d'aluminium et/ou en nitrure ou oxynitrure de silicium.

## Description

L'invention concerne les vitrages munis d'empilements de couches minces agissant sur le rayonnement solaire, notamment ceux destinés à l'isolation thermique et/ou la protection solaire.

Ce type de vitrage est plus particulièrement adapté pour équiper des bâtiments : en agissant, grâce aux couches minces, sur la quantité d'énergie du rayonnement solaire, il permet d'éviter à l'intérieur des locaux un échauffement excessif en été et contribue ainsi à limiter la consommation d'énergie nécessaire à leur climatisation.

L'invention concerne également ce type de vitrage une fois opacifié de façon à faire partie d'un panneau de parement de façade, appelé de façon plus concise allège, et qui permet, en association avec des vitrages pour la vision, d'offrir des surfaces extérieures de bâtiments entièrement vitrées.

Ces vitrages (et allèges) à couches sont soumis à un certain nombre de contraintes : en ce qui concerne les vitrages, les couches employées doivent être suffisamment filtrantes vis-à-vis du rayonnement solaire. En outre, ces performances thermiques doivent préserver l'aspect optique, l'esthétisme du vitrage : il est souhaitable de pouvoir moduler le niveau de transmission lumineuse du substrat, et de garder une couleur esthétique, tout particulièrement en réflexion extérieure. Cela est aussi vrai des allèges en ce qui concerne l'aspect en réflexion. Ces couches doivent aussi être suffisamment durables, et cela d'autant plus si, dans le vitrage une fois monté, elles sont sur l'une des faces extérieures du vitrage (par opposition aux faces "intérieures", tournées vers la lame de gaz intercalaire d'un double vitrage par exemple).

Une autre contrainte s'impose progressivement : quand les vitrages sont constitués au moins en partie de substrats verriers, ceux-ci peuvent avoir à subir un ou plusieurs traitements thermiques, par exemple un bombage si on veut leur conférer un galbe (vitrine), une trempe ou un recuit si on veut qu'ils soient plus résistants/moins dangereux en cas de chocs. Le fait que des couches soient déposées sur le verre avant son traitement thermique risque d'entraîner leur détérioration et une modification sensible de leurs propriétés notamment optiques (déposer les couches après le traitement thermique du verre est complexe et coûteux).

Une première approche consiste à prévoir la modification d'aspect optique du verre due aux couches après le traitement thermique, et à configurer les couches pour qu'elles ne présentent les propriétés voulues, notamment optiques et thermiques, qu'après ce traitement. Mais de fait, cela contraint à fabriquer en parallèle deux types d'empilements de couches, l'un pour les vitrages non trempés/non bombés et les autres pour les vitrages qui vont être trempés/bombés. On cherche désormais à éviter cela, en concevant des empilements de couches minces (interférentielles) qui puissent être aptes à supporter des traitements thermiques sans modifier trop significativement les propriétés optiques du verre et sans dégradation de son aspect (défaut optique). On peut parler alors de couches "bombables" ou "trempables".

Un exemple de vitrage anti-solaire pour le bâtiment est donné par les brevets EP-0 511 901 et EP-0 678 483 : il s'agit de couches fonctionnelles sur le plan de la filtration des rayonnements solaires qui sont en alliage nickel-chrome, éventuellement nitruré, en acier inox ou en tantale, et qui sont disposées entre deux couches de diélectrique en oxyde métallique comme SnO₂, TiO₂ ou Ta₂O₅. Ces vitrages sont de bons vitrages anti-solaires, présentant des durabilités mécanique et chimique satisfaisantes, mais ne sont pas véritablement "bombables" ou "trempables", car les couches d'oxyde entourant la couche fonctionnelle ne peuvent empêcher son oxydation lors du bombage ou de la trempe, oxydation s'accompagnant d'une modification de la transmission lumineuse, et de l'aspect en général du vitrage dans son ensemble.

Beaucoup d'études ont été réalisées récemment pour rendre les couches bombables/trempables dans le domaine des vitrages bas-émissifs, visant plutôt de hautes transmissions lumineuses contrairement aux anti-solaires. Il a déjà été proposé d'utiliser au-dessus de couches fonctionnelles en argent des couches en diélectrique à base de nitrure de silicium, ce matériau étant relativement inerte vis-à-vis de l'oxydation à haute température et s'avérant apte à préserver la couche d'argent sous-jacente, comme cela est décrit dans le brevet EP-0 718 250.

D'autres empilements de couches agissant sur le rayonnement solaire présumés bombables/trempables ont été décrits, ayant recours à des couches fonctionnelles autres que l'argent : le brevet EP-0 536 607 utilise des couches fonctionnelles en nitrure métallique, du type TiN ou CrN, avec des couches de protection en métal ou en dérivés de silicium, le brevet EP-0 747 329 décrit des couches fonctionnelles en alliage au nickel du type NiCr associées avec des couches en nitrure de silicium.

Cependant ces empilements à fonction anti-solaire présentent des performances encore susceptibles d'amélioration, notamment en termes de durabilité et de résistance à la dégradation face à un traitement thermique à haute température.

On entend par couche "fonctionnelle" dans la présente demande la (les) couche(s) de l'empilement qui confère à l'empilement l'essentiel de ses propriétés thermiques, par opposition aux autres couches, généralement en matériau diélectrique, ayant comme rôle celui d'une protection chimique ou mécanique des couches fonctionnelles, un rôle optique, un rôle de couche d'adhésion, etc...

Le but de l'invention est alors de mettre au point un nouveau type d'empilements de couches minces agissant sur le rayonnement solaire, en vue de fabriquer des vitrages de protection solaire améliorés. L'amélioration visée est notamment l'établissement d'un compromis meilleur entre durabilité, propriétés thermiques, propriétés optiques et aptitude à supporter les traitements thermiques sans dommage quand le substrat porteur de l'empilement est de type verrier.

L'autre but de l'invention est de rendre cet empilement de couches compatible avec l'utilisation du vitrage, une fois opacifié, en tant qu'allège.

L'objet de l'invention est tout d'abord un substrat transparent, notamment en verre, muni d'un empilement de couches minces agissant sur le rayonnement solaire et qui comprend au moins une couche fonctionnelle à caractère essentiellement métallique et comprenant majoritairement au moins un des métaux appartenant au groupe du niobium, du tantale, du zirconium, surmontée d'au moins une surcouche, qui est à base de nitrure ou d'oxynitrure de silicium, ou à base de nitrure ou d'oxynitrure d'aluminium ou d'un mélange d'au moins deux de ces composés (nitrures ou oxynitrures mixtes Si-A1).

Alternativement, la couche fonctionnelle selon l'invention peut être à base d'un métal partiellement ou entièrement nitruré, ledit métal appartenant au groupe du niobium, du tantale, du zirconium.

La combinaison de ces types de couche fonctionnelle et de ces types de surcouche s'est avérée extrêmement avantageuse pour des vitrages de protection solaire : les couches fonctionnelles de type Nb, Ta, Zr sont particulièrement stables et, indépendamment de la nature de la surcouche, sont en elles-mêmes plus appropriées que d'autres couches fonctionnelles déjà utilisées dans le même type d'application pour subir des traitements thermiques divers. On a en effet pu montrer que, par exemple, le niobium tendait à moins s'oxyder que d'autres métaux comme le titane ou le nickel, et que les métaux sélectionnés étaient aussi plus stables que les alliages Ni-Cr contenant une quantité significative en chrome, car le chrome a une tendance à diffuser sous l'effet de la chaleur vers les couches et le verre adjacents, et à faire de fait évoluer optiquement l'empilement de couches dans son ensemble. Les couches fonctionnelles de type nitrure, tout particulièrement le nitrure de niobium, présentent également une forte stabilité chimique.

En outre, les couches fonctionnelles de l'invention permettent de moduler dans les gammes voulues détaillées ci-après la valeur de transmission lumineuse du substrat, en ajustant leurs épaisseurs, tout en gardant un effet anti-solaire notable, même à transmission lumineuse relativement élevée : elles sont en un mot suffisamment sélectives, en permettant d'atteindre notamment des bons compromis entre niveau de transmission lumineuse (T_{L}) et facteur solaire (FS) (le facteur solaire se définit comme le rapport entre l'énergie totale entrant dans un local à travers le vitrage et l'énergie solaire incidente). On peut définir comme un "bon" compromis le fait que les valeurs de T_{L} et de FS d'un vitrage anti-solaire soient voisines l'une de l'autre, avec par exemple un Fs d'au plus 5 à 10 points supérieurs à celui de la T_{L}, notamment d'au plus 2 à 3% supérieur à celui de la T_{L}. Ce compromis peut aussi s'exprimer en comparant les valeurs de T_{L} et de transmission énergétique T_{E}, un "bon" compromis étant obtenu quand la valeur de T_{E} est proche de celle de T_{L}, par exemple de plus ou moins 5, notamment de plus ou moins 2 à 3% par rapport à celle de la T_{L}. Le choix d'une surcouche à base de nitrure de silicium ou d'aluminium (Si₃N₄ et AlN en abrégé) ou en oxynitrure de silicium ou d'aluminium (SiON et AlNO en abrégé, sans préjuger des quantités respectives en Si, O et N) s'est aussi révélé très avantageux à plusieurs titres: ce type de matériau s'est avéré capable de protéger à haute température les couches fonctionnelles de l'invention, notamment vis-à-vis de l'oxydation, en préservant leur intégrité, ce qui a rendu l'empilement selon l'invention bombable/trempable dans le cas où le substrat porteur de l'empilement est en verre et qu'on veut lui faire subir un tel traitement thermique après dépôt des couches : la modification des propriétés optiques induites par un traitement thermique du type trempe, est faible avec une transmission lumineuse et un aspect en réflexion extérieure suffisamment peu modifiés pour ne pas être significativement perceptibles à l'oeil humain.

En outre, son indice de réfraction, proche de 2, est similaire à celui d'oxydes métalliques du type SnO₂, ZnO : il agit optiquement similairement à ceux-ci, sans complication particulière. Il protège aussi correctement sur le plan mécanique et chimique, le reste de l'empilement.

Enfin, on a découvert qu'il était également compatible avec un traitement ultérieur d'émaillage, qui intéresse tout particulièrement les allèges. En effet, pour opacifier les vitrages en allèges, on a généralement deux voies possibles : soit on dépose une laque sur le verre, que l'on sèche et durcit avec un traitement thermique modéré, soit on dépose un émail. L'émail tel qu'on le dépose de façon habituelle est composé d'une poudre contenant une fritte de verre (la matrice vitreuse) et des pigments employés comme colorants (la fritte et les pigments étant à base d'oxydes métalliques), et un médium appelé aussi véhicule permettant l'application de la poudre sur le verre et son adhésion avec celui-ci au moment du dépôt. Pour obtenir le revêtement émaillé final, il faut ensuite le cuire, et il est fréquent que cette opération de cuisson se fasse concomitamment à l'opération de trempe/bombage du verre. On pourra se reporter pour plus de détails sur des compositions d'émail aux brevets FR-2 736 348, WO96/41773, EP-718 248, EP-712 813, EP-636 588. L'émail, revêtement minéral, est durable, adhérent au verre et donc un revêtement opacifiant intéressant. Cependant, quand le vitrage est préalablement muni de couches minces, son utilisation est délicate pour deux raisons :
- d'une part, la cuisson de l'émail signifie devoir soumettre l'empilement de couches à un traitement thermique à haute température, ce qui n'est possible que si ce dernier est capable de ne pas se détériorer optiquement lors de ce traitement,
- d'autre part, l'émail tend à relarguer au cours du temps des substances chimiques qui viennent diffuser dans les couches sous-jacentes et les modifier chimiquement.

Or, utiliser une couche en nitrure ou oxynitrure de silicium ou d'aluminium pour terminer l'empilement de couches minces a été très efficace, à la fois pour rendre l'ensemble de l'empilement apte à supporter les traitements thermiques et pour faire barrière à ces composés chimiques susceptibles de diffuser hors de la couche d'émail. De fait, l'empilement de couches selon l'invention est émaillable, en ce sens qu'on peut déposer sur lui un émail et le cuire sans en modifier sensiblement l'aspect optique par rapport à un vitrage de vision muni des mêmes couches, en réflexion extérieure. Et c'est justement là l'enjeu des allèges, à savoir offrir une harmonie de couleur, une similarité la plus grande possible en aspect extérieur avec les vitrages, pour pouvoir constituer des façades entièrement vitrées esthétiques.

Combiner les couches fonctionnelles et la surcouche selon l'invention a encore présenté un autre avantage : si le Si₃N₄, le SiON, l'AlN ou l'AlNO ont les propriétés très intéressantes évoquées plus haut, ils ont aussi tendance à avoir des problèmes d'adhérence avec beaucoup de couches métalliques. C'est notamment le cas des couches en argent. Il est alors nécessaire d'avoir recours à des moyens pour augmenter cette adhésion et éviter la délamination de l'empilement : on peut notamment interposer des couches d'adhésion, par exemple de fines couches en métal ou à base d'oxyde de zinc présentant une bonne compatibilité entre les deux matériaux en cause. La présence de ces couches d'adhésion est inutile dans le cadre de l'invention. Ainsi, on a pu vérifier que les couches fonctionnelles de l'invention, notamment celles en Nb, adhéraient de façon très satisfaisante aux couches en Si₃N₄, SiON, AlN ou AlNO, en utilisant une technique de dépôt par pulvérisation cathodique, notamment assistée par champ magnétique.

Optionnellement, l'empilement de couches selon l'invention peut comprendre également, entre le substrat et la couche fonctionnelle, au moins une sous-couche en matériau diélectrique transparent, notamment choisi comme pour la surcouche en nitrure ou oxynitrure de silicium et/ou en nitrure ou oxynitrure d'aluminium, ou encore en oxyde de silicium SiO₂.

Sa présence peut permettre de moduler avec plus de souplesse l'aspect optique conféré par l'empilement de couches à son substrat porteur. En outre, en cas de traitement thermique, elle constitue une barrière supplémentaire, notamment vis-à-vis de l'oxygène et des alcalins du substrat en verre, espèces susceptibles de migrer à la chaleur et de dégrader l'empilement.

Une variante préférée consiste à utiliser à la fois une surcouche et une surcouche en nitrure ou oxynitrure, notamment toutes les deux à base de nitrure de silicium.

Il s'est avéré intéressant, dans ce cas, de prévoir selon un mode de réalisation, que la surcouche soit plus épaisse que la sous-couche, par exemple d'au moins un facteur 1,2 ou 1,5 ou 1,8 : elle peut même avoir une épaisseur 2, 3 ou 4 fois plus grande (en raisonnant en épaisseur géométrique). Il a en effet été montré dans la présente invention que des surcouches plus épaisses garantissaient une meilleure stabilité optique vis-à-vis de traitements thermiques du type trempe.

Selon un autre mode de réalisation, non exclusif du précédent, on peut prévoir d'utiliser de multiples sous-couches, notamment présentant une alternance d'indices de réfraction forts (par exemple entre 1,8 à 2,2) et faibles (par exemple entre 1,4 et 1,6). Il s'agit de préférence de séquences du type Si₃N₄ (indice ≈ 2)/SiO₂ (indice ≈ 1,45) ou Si₃N_{4/}SiO_{2/}Si₃N₄. Ces séquences permettent d'ajuster l'aspect en réflexion extérieure du substrat, notamment en vue d'en atténuer la valeur de R_{L} et/ou sa couleur.

L'empilement de couches selon l'invention peut comprendre également, optionnellement, au-dessus et/ou en dessous de la couche fonctionnelle une couche supplémentaire d'un nitrure d'au moins un métal choisi parmi le niobium, le titane, le zirconium, le chrome. En fait, elle peut donc se trouver interposée entre la couche fonctionnelle et la surcouche et/ou entre la couche fonctionnelle et le substrat (ou entre la couche fonctionnelle et la sous-couche quand il y en a une). Quand la couche fonctionnelle est elle-même en nitrure, on peut donc avoir la superposition de deux couches de nitrure de métaux différents.

Cette couche supplémentaire en nitrure s'est avérée capable d'ajuster plus finement la couleur en réflexion extérieure de l'empilement, grâce à la diminution de l'épaisseur de la couche fonctionnelle qu'elle autorise : on peut ainsi "remplacer" une partie de l'épaisseur de la couche fonctionnelle par cette couche supplémentaire.

Avantageusement, la ou les couches de l'empilement qui sont à base de nitrure ou d'oxynitrure de silicium contiennent également un métal minoritaire par rapport au silicium, par exemple de l'aluminium, notamment jusqu'à 10% en poids du composé constituant la couche en question. Cela est utile pour accélérer le dépôt de la couche par pulvérisation cathodique assistée par champ magnétique et réactive, où la cible en silicium sans un "dopage" par un métal n'est pas assez conductrice. Le métal peut en outre conférer une meilleure durabilité au nitrure ou à l'oxynitrure.

En ce qui concerne les épaisseurs des couches décrites plus haut, on choisit usuellement une gamme d'épaisseur de 5 à 50 nm pour la couche fonctionnelle, notamment entre 8 et 40 nm. Le choix de son épaisseur permet de moduler la transmission lumineuse du substrat dans des gammes utilisées pour les vitrages de protection solaire pour le bâtiment, soit notamment de 5 à 50% ou de 8 à 45%. Bien sûr, le niveau de transmission lumineuse peut être également modifié à l'aide d'autres paramètres, notamment l'épaisseur et la composition du substrat, s'il est en verre clair ou coloré tout particulièrement.

L'épaisseur de la surcouche est de préférence comprise entre 5 et 70, notamment entre 10 et 35 nm. Elle est par exemple de 15, 20 ou 30 nm.

L'épaisseur de la sous-couche optionnelle est de préférence comprise entre 5 et 120, notamment entre 7 et 90 nm.

Quand il s'agit d'une sous-couche unique, du type Si₃N₄, elle est par exemple de 5 à 30 nm, notamment d'environ 10 à 15 ou 20 nm. S'il s'agit d'une séquence de plusieurs couches, chacune des couches peut avoir une épaisseur de par exemple 5 à 50 nm, notamment 15 à 45 nm.

La sous-couche et/ou la surcouche peuvent en fait faire partie d'une superposition de couches en matériau diélectrique. L'une ou l'autre peut ainsi être associée à d'autres couches d'indices de réfraction différents. Ainsi, l'empilement de couches peut comporter entre le substrat et la couche fonctionnelle (ou au-dessus de la couche fonctionnelle) une alternance de trois couches haut indice/bas indice/haut indice, la couche à "haut indice" (au moins 1,8 à 2) ou l'une d'entre elles pouvant être la sous-couche de l'invention de type Si₃N₄, AlN, et la couche à "bas indice" (inférieur à 1,7 par exemple) pouvant être en oxyde de silicium SiO₂.

L'épaisseur de la couche supplémentaire de nitrure métallique est de préférence comprise entre 2 et 20 nm, notamment entre 5 et 10 nm. Elle est donc de préférence fine, et ne participe donc éventuellement, que très minoritairement à l'effet de protection solaire conféré par la couche de métal.

Un mode de réalisation préféré de l'invention est un empilement comprenant une couche fonctionnelle à base de niobium ou de nitrure de niobium, une surcouche à base de nitrure de silicium, une sous-couche optionnelle également à base de nitrure de silicium.

L'invention a également pour objet le substrat muni de l'empilement de couches décrit plus haut, de façon générale, et qui est bombable et/ou trempable et/ou émaillable. On comprend au sens de l'invention par "bombable et/ou trempable", un empilement, qui, déposé sur un substrat, subit une évolution optique limitée, qui peut notamment être quantifiée en se plaçant dans le système de colorimétrie (L*, a*, b*), par une valeur ΔE inférieure à 3, notamment inférieure à 2.

On définit ΔE de la façon suivante :
ΔE = (ΔL² + Δa² + Δb²)^{1/2}, avec ΔL, Δa et Δb la différence dans les mesures de L*, a* et b* avant et après traitement thermique.

On considère comme "émaillable" l'empilement sur lequel on peut déposer de façon connue une composition d'émail, sans apparition de défauts optiques dans l'empilement et avec une évolution optique limitée, que l'on peut quantifier comme précédemment. Cela signifie également qu'il présente une durabilité satisfaisante, sans détérioration gênante des couches de l'empilement au contact de l'émail ni au cours de sa cuisson, ni au cours du temps une fois le vitrage monté.

Bien sûr, un empilement de ce type est intéressant quand on utilise des substrats en verre clair ou teinté dans la masse. Cependant, on peut tout aussi bien ne pas chercher à exploiter son caractère bombable/trempable, mais simplement sa durabilité satisfaisante, en utilisant des substrats verriers mais aussi non-verriers, notamment en matériau polymère rigide et transparent comme le polycarbonate, le polyméthacrylate de méthyle (P.M.M.A) se substituant au verre, ou encore un matériau polymère souple, comme certains polyuréthanes ou comme le polyéthylènetéréphtalate (PET), matériau souple que l'on peut ensuite solidariser à un substrat rigide pour le fonctionnaliser, en les faisant adhérer par différents moyens, ou par une opération de feuilletage.

L'invention a pour objet les vitrages "monolithiques" (c'est-à-dire constitués d'un substrat unique) ou les vitrages multiples isolants du type double vitrage. De préférence, qu'il s'agisse de vitrages monolithiques ou de double vitrage, les empilements de couches sont disposés en face 2 (conventionnellement, on numérote les faces des verres/substrats d'un vitrage de l'extérieur vers l'intérieur de l'habitacle/du local qu'il équipe), et procurent un effet de protection contre la rayonnement solaire.

Les vitrages intéressant plus particulièrement l'invention ont une T_{L} de l'ordre de 5 à 50%, notamment 8 à 45%, et un facteur solaire FS inférieur à 50%, notamment voisin de la valeur de T_{L}. Ils ont également préférentiellement une couleur bleue ou verte en réflexion extérieure (du côté du substrat dépourvu de couches), avec notamment dans le système de colorimétrie (L*, a*, b*) des valeurs de a* et b* négatives (avant et après tout traitement thermique éventuel). On a ainsi une teinte agréable et peu intense en réflexion, recherchée dans le bâtiment.

L'invention a également pour objet le substrat à couches au moins partiellement opacifié par un revêtement de type laque ou émail, en vue de faire des allèges, où le revêtement opacifiant est en contact direct avec l'empilement de couches. L'empilement de couches peut donc être parfaitement identique pour le vitrage vision et pour l'allège.

Si l'application plus particulièrement visée par l'invention est le vitrage pour le bâtiment, il est clair que d'autres applications sont envisageables, notamment dans les vitrages de véhicules (mis à part le pare-brise où l'on exige une très haute transmission lumineuse), comme les verres latéraux, le toit-auto, la lunette arrière.

L'invention sera décrite ci-après avec plus de détails à l'aide d'exemples non limitatifs.

Tous les substrats sont en verre clair de 6 mm d'épaisseur de type Planilux commercialisé par la société Saint-Gobain Vitrage.

Toutes les couches sont déposées de façon connue par pulvérisation cathodique assistée par champ magnétique : les couches en métal à partir de cible en métal en atmosphère inerte (100% Ar), les couches en nitrure de métal ou de silicium à partir de la cible de métal ou de silicium (dopé avec 8% en masse d'aluminium) adéquate dans une atmosphère réactive contenant de l'azote (100% N₂ pour le TiN, 40% Ar et 60% N₂ pour Si₃N₄). Les couches en Si₃N₄ contiennent donc un peu d'aluminium.

### EXEMPLE 1

Cet exemple utilise une couche fonctionnelle en Nb et une surcouche en Si₃N₄ selon la séquence suivante :
verre / Nb (30 nm) / Si₃N₄ (31 nm)

Après dépôt des couches, le substrat subit le traitement thermique suivant : chauffage à 620°C pendant 10 minutes.

### EXEMPLE 2

Cet exemple utilise la même couche fonctionnelle et la même surcouche qu'à l'exemple 1, avec une sous-couche en Si₃N₄ supplémentaire selon la séquence suivante :
verre / Si₃N₄ (10 nm) / Nb (30 nm) / Si₃N₄ (31 nm)

le substrat revêtu subit ensuite le même traitement thermique qu'à l'exemple 1.

### EXEMPLE 3

Cet exemple utilise la même séquence de couches qu'à l'exemple 2, mais avec de légères modifications dans leurs épaisseurs :
verre / Si₃N₄ (10 nm) / Nb (33 nm) / Si₃N₄ (27 nm)

Après dépôt des couches, on effectue un émaillage du substrat sur sa face revêtue de l'empilement de couches. La composition d'émail est standard, par exemple du type décrit dans un brevet précité comme FR-2 736 348, l'émaillage se fait de façon connue avec un traitement thermique de cuisson de l'émail vers 620°C.

### EXEMPLE 4

Cet exemple reprend la séquence de couches des exemples 2 et 3, mais avec une épaisseur de couche fonctionnelle plus faible, afin de viser des vitrages à transmission lumineuse plus élevée :
verre / Si₃N₄ (10 nm) / Nb (12 nm) / Si₃N₄ (17 nm)

Le substrat revêtu subit ensuite le même traitement thermique qu'à l'exemple 1.

### EXEMPLE 5

Cet exemple reprend la séquence de couches de l'exemple 4, mais en "remplaçant" une partie de l'épaisseur de la couche fonctionnelle de Nb par une couche supplémentaire de TiN entre cette dernière et la surcouche.

La séquence de couches est la suivante :
verre / Si₃N₄ (10 nm) / Nb (8 nm) / TiN (5 nm) / Si₃N₄ (17 nm)

Le substrat revêtu subit ensuite le même traitement thermique qu'à l'exemple 1.

### EXEMPLE 6

Cet exemple illustre une autre variante de l'invention où la couche fonctionnelle est en nitrure métallique, ici du nitrure de niobium.

La séquence de couches est la suivante :
verre / Si₃N₄ (10 nm) / NbN (10 nm) / Si₃N₄ (15 nm)

Les couches de Si₃N₄ sont obtenues comme précédemment, la couche de NbN est obtenue à partir d'une cible de niobium dans une atmosphère réactive à 30% d'azote en volume.

### EXEMPLE COMPARATIF 1

Cet exemple sert de comparaison avec l'exemple 1 : au lieu d'une couche fonctionnelle en Nb, il utilise une couche fonctionnelle en alliage NiCr 40/60 en poids. La séquence de couches est la suivante :
verre / NiCr (30 nm) / Si₃N₄ (27 nm)

Le verre revêtu subit ensuite le même traitement thermique que l'exemple 1.

### EXEMPLE COMPARATIF 2

Cet exemple sert de comparaison avec l'exemple 2 : il utilise une couche fonctionnelle en NiCr 40/60 en poids au lieu d'une couche fonctionnelle en Nb.

La séquence de couches est la suivante :
verre / Si₃N₄ (10 nm) / NiCr (30 nm) / Si₃N₄ (27 nm)

Le verre revêtu subit ensuite le même traitement thermique qu'à l'exemple 1.

Le tableau 1 ci-dessous regroupe pour les exemples 1, 2, comparatif 1 et comparatif 2 les données suivantes :
- transmission optique T_{L} : transmission lumineuse en % selon l'illuminant D₆₅
   λdom_{(T)} : la longueur d'onde dominante de la couleur en transmission en nm,
   pe_{(T)} : la pureté d'excitation de la de couleur en transmission, en %,
- réflexion extérieure (c'est-à-dire celle mesurée côté extérieur, quand le verre revêtu est monté en vitrage monolithique dans un local avec l'empilement de couches en face 2 : réflexion extérieur (R_{LEXT}) en %, a*(R_{EXT}), b*(R_{EXT}) les coordonnées colorimétriques en réflexion extérieure selon le système de colorimétrie (L, a*, b*)
- réflexion intérieure : la valeur de R_{LINT} en %, et les données colorimétriques a*(R_{INT}), b*(R_{INT}),
- transmission énergétique : T_{E} en %

Toutes ces données sont indiquées deux fois : avant traitement thermique et après traitement thermique. Sont mesurées également en transmission ΔE(T), en réflexion extérieure ΔE(R_{EXT}) et en réflexion intérieure ΔE(R_{INT}), avec ΔE = (ΔL² + Δa² + Δb²)^{1/2} pour la transmission, avec :
Δa = a* (après traitement) - a* (avant traitement),
Δb = b* (après traitement) - b* (avant traitement)
ΔL = L* (après traitement) - L* (avant traitement)

**TABLEAU 1**

| **EXEMPLE** | **Traitement thermique** | **TRANSMISSION** | | | | **REFLEXION EXTERIEURE** | | | | **REFLEXION INTERIEURE** | | | | |
|---|---|---|---|---|---|---|---|---|---|---|---|---|---|---|
| | | T_{L} | λ_{(T)} | Pe_{(T)} | ΔE_{(T)} | R_{LEXT} | a*_{(REXT)} | b*_{(REXT)} | ΔE_{(REXT)} | R_{LINT} | a*_{(RINT)} | b*_{(RINT)} | ΔE_{(RINT)} | T_{E} |
| Exemple comparatif 1 | Avant | 11.5 | 479 | 7.7 | - | 43.0 | -1.8 | -1.0 | - | 32.7 | 0.7 | 21.6 | - | 10.2 |
| | Après | 18.8 | 481 | 9.7 | 10.1 | 34.8 | -1.9 | 1.7 | 6.5 | 25.9 | 2.1 | 13.7 | 10.1 | 15.5 |
| Exemple comparatif 2 | Avant | 12.4 | 479 | 9 | - | 42 | -2 | 0.3 | - | 30.5 | 1.1 | 24.5 | - | 10.7 |
| | Après | 10.6 | 477 | 13.1 | 2.3 | 43.2 | -1.8 | 1.5 | 1.5 | 38.2 | 0.2 | 19.9 | 7.7 | 9.1 |
| Exemple 1 | Avant | 10.2 | 572 | 2.3 | - | 45.5 | -2.7 | -1.8 | - | 31.3 | 0.1 | 18.7 | - | 9.0 |
| | Après | 9 | 544 | 1 | 2.2 | 46.6 | -2.1 | -0.5 | 1.6 | 35.7 | 0.6 | 16.0 | 2.7 | 8.2 |
| Exemple 2 | Avant | 12.5 | 500 | 0.3 | - | 41.8 | -2.5 | -1.4 | - | 30 | 0.1 | 17.6 | - | 11.3 |
| | Après | 11.4 | 566 | 0.8 | 1.7 | 42.2 | -2.7 | -1.4 | 0.3 | 32.1 | 0.2 | 18.1 | 1.8 | 10.3 |

Ce tableau montre que les exemples 1 et 2 selon l'invention offrent un bon compromis T_{L}/T_{E} avant traitement thermique, avec des valeurs de T_{L} et T_{E} voisines : ils offrent une bonne protection anti-solaire. Ils sont aussi bons sur le plan esthétique, tout particulièrement en réflexion extérieure où les valeurs de a* et b* sont négatives et, en valeurs absolues peu élevées, d'au plus 2,7 : c'est une couleur peu intense et dans les bleu-vert appréciée pour les vitrages à forte réflexion extérieure.

Ce qui est notable, c'est que tous ces avantages sont conservés après traitement thermique : les valeurs de T_{L} et T_{E} sont conservées à 1% près, les données colorimétriques changent très peu, il n'y a aucun basculement d'une teinte vers une autre teinte en réflexion extérieure. Il n'y a aucun défaut optique. La valeur de ΔE, quantifiant une éventuelle évolution colorimétrique, reste d'au plus 2,7 en transmission, en réflexion intérieure et extérieure, avec un ΔE de seulement 1,6 en réflexion extérieure : il s'agit bien d'un empilement apte à subir sans dégradation significative un traitement de type bombage ou trempe. Que l'on souhaite un verre trempé, recuit, bombé ou non, l'invention propose un empilement anti-solaire aux propriétés identiques, préservées. Les remarques faites à propos de l'exemple 1 s'appliquent également à l'exemple 2, avec une évolution optique encore plus faible : un ΔE de seulement 0,3 en réflexion extérieure notamment.

On voit qu'il est avantageux de prévoir une surcouche en Si₃N₄ plus épaisse d'au moins 5 à 15 ou 20 nm par rapport à l'épaisseur de la sous-couche en Si₃N₄ : on y gagne en trempabilité, tout en gardant un aspect en réflexion satisfaisant.

Les résultats des exemples comparatifs 1 et 2 sont bien moins bons : ces empilements ne sont clairement pas bombables/trempables au sens de l'invention : les valeurs de T_{L} et T_{E} changent beaucoup. Dans l'exemple comparatif 1, on passe ainsi de 11,5 à près de 20% en T_{L}. Les valeurs de ΔE en réflexions intérieure et extérieure pour l'exemple comparatif 1 sont au moins trois fois supérieures à celles obtenues selon l'invention, et le signe de b* change en réflexion extérieure : il y a un basculement de teinte. Cela confirme le fait qu'il est préférable de supprimer ou limiter au maximum la présence de chrome dans les couches fonctionnelles (par exemple au plus 20%, notamment au plus 10 ou au plus 5% en poids), le chrome ayant vraisemblablement un rôle, par sa propension à diffuser à haute température, dans ces modifications.

Le tableau 2 ci-dessous fournit des données déjà explicitées pour le tableau 1 en ce qui concerne l'exemple 3 où un émaillage a été réalisé sur les couches : les valeurs de R_{LEXT}, a*_{(REXT)} et b*_{(REXT)} ont été mesurées avant et après émaillage (même montage du vitrage devenu allège que dans le tableau 1 : verre monolithique, couches et émail en face 2).

**TABLEAU 2**

| Exemple 3 | Emaillage | TRANSMISSION | | | REFLEXION EXTERIEURE | | | | REFLEXION INTERIEURE | | |
|---|---|---|---|---|---|---|---|---|---|---|---|
| | | T_{L} | λd_{(T)} | Pe_{(T)} | R_{LEXT} | a*_{(REXT)} | b*_{(REXT)} | ΔE | R_{LINT} | a*_{(RINT)} | b*_{(RINT)} |
| | Avant | 7.7 | 565 | 2.4 | 43.6 | -3.2 | 1.1 | - | 35.5 | 0.5 | 18.4 |
| | Après | - | - | - | 43.7 | -2.5 | 2.8 | 1,0 | - | - | - |

On vérifie que la teinte reste sensiblement la même en réflexion extérieure après émaillage avec un ΔE de l'ordre de 1. Il n'y a pas non plus de vieillissement de l'allège significativement plus élevé que dans le cas d'une allège standard, avec le même émail déposé directement sur le verre.

Le tableau 3 ci-dessous regroupe des données déjà explicitées plus haut, pour les exemples 4 et 6 (même configuration en verre monolithique avec les couches en face 2).

**TABLEAU 3**

| | **TRANSMISSION** | | | | **REFLEXION EXTERIEURE** | | | | **REFLEXION INTERIEURE** | | | |
|---|---|---|---|---|---|---|---|---|---|---|---|---|
| | T_{L} (%) | λd (nm) | Pe (%) | ΔE_{(T)} | R_{LEXT} | a* | b* | ΔE_{(R)} | R_{LINT} | a* | b* | T_{E} |
| Exemple 4 | 32.3 | 541 | 0.6 | 2,7 | 14.4 | -1.7 | -4.8 | 3,3 | 25.3 | -0.3 | 1.2 | 31.0 |
| Exemple 5 | 30.6 | 535 | 1.4 | 2,3 | 16.6 | -1.7 | -7.2 | 2,5 | 27.7 | -1.7 | 1.6 | 27.6 |
| Exemple 6 | 31.2 | 483 | 4.2 | 1.2 | 17.9 | -0.4 | -3.5 | 1.4 | 27.8 | 0.7 | 3.1 | 30.0 |

On constate ainsi les avantages de l'insertion d'une couche supplémentaire de TiN : il est plus difficile d'atteindre de faibles valeurs de ΔE, notamment des valeurs inférieures à 2, quand il s'agit de vitrages à couches ayant des transmissions lumineuses relativement élevées, ici d'environ 30% alors qu'elle était d'environ 8% pour les exemples précédents. Or ajouter la couche de TiN (exemple 6) permet de faire passer à la valeur de ΔE le seuil de 2. Le TiN a donc à la fois un rôle d'ajustement colorimétrique per se, et un rôle de stabilisation de l'aspect en réflexion extérieure pour les vitrages à couches ayant une T_{L} notamment supérieure à 20%.

Les exemples 7 à 9 suivants ont été réalisés, notamment en vue de mieux ajuster la couleur en réflexion extérieure des vitrages.

### EXEMPLE 7

Cet exemple utilise une couche fonctionnelle en nitrure de niobium et une double sous-couche, alternant une couche en Si3N4 (indice de réfraction d'environ 2), et une couche en SiO2 (indice de réfraction d'environ 1,45).

La séquence est la suivante :
Verre / Si₃N₄ / SiO₂ / NbN / Si₃N₄
(20nm) (40nm) (20nm)

L'épaisseur de la couche de NbN a été réglée de façon à obtenir une transmission lumineuse de 32%

### EXEMPLE 8

Cet exemple est similaire à l'exemple 7, mais on substitue à la couche de NbN une couche métallique de Nb (avec une épaisseur telle que, là encore, la transmission lumineuse soit de 32%).

On a donc la séquence :
Verre / Si₃N₄ / SiO₂ / Nb / Si₃N₄
(20nm) (40nm) (20nm)

### EXEMPLE 9

Cet exemple se rapproche de l'exemple 8, mais en utilisant une triple sous-couche alternant une couche à haut indice, une couche à bas indice et une couche à haut indice à nouveau.

La séquence est la suivante :
Verre / Si₃N₄ / SiO₂ / Si₃N₄ / Nb / Si₃N₄
(30nm) (30nm) (20nm) (30nm) (27nm)

L'épaisseur de la couche de Nb est ajustée pour avoir une TL d'environ 8%.

Le tableau 2 ci-dessous regroupe pour les exemples 7 et 8 les mêmes données photométriques en transmission et en réflexion extérieure que celles déjà explicitées au tableau 1.

**TABLEAU 2**

| **EXEMPLE** | **TRAITEMENT THERMIQUE** | **TRANSMISSION** | | | | **REFLEXION EXTERIEURE** | | | |
|---|---|---|---|---|---|---|---|---|---|
| | | T_{L} (%) | λd (nm) | pe (%) | ΔE_{(T)} | Rₗₑₓₜ | a*ᵣₑₓₜ | b*ᵣₑₓₜ | ΔE_{(R)} |
| Ex.7 | avant | 32.3 | 489 | 2,3 | - | 15,3 | 1,7 | -10,3 | - |
| | après | 31,8 | 484 | 4,3 | 1,7 | 15,7 | 1.7 | -9,1 | 2,0 |
| Ex.8 | avant | 32,2 | 572 | 3,7 | - | 13,3 | 1,0 | -15,0 | - |
| | après | 30,7 | 563 | 2,1 | 2,4 | 15,4 | 0,9 | -11,8 | 4,3 |

L'exemple 10 suivant utilise une couche fonctionnelle en tantale.

### EXEMPLE 10

Cet exemple utilise la séquence de couches suivantes :
Verre / Si₃N₄ / Ta / Si₃N₄
(10nm) (7nm) (20nm)

Le tableau 3 ci-dessous regroupe pour cet exemple les mêmes informations que celles figurant au tableau 2.

**TABLEAU 3**

| **EXEMPLE** | **TRAITEMENT THERMIQUE** | **TRANSMISSION** | | | | **REFLEXION EXTERIEURE** | | | |
|---|---|---|---|---|---|---|---|---|---|
| | | T_{L} (%) | λd (nm) | Pe (%) | ΔE_{(T)} | Rₗₑₓₜ | a*ᵣₑₓₜ | b*ᵣₑₓₜ | ΔE_{(R)} |
| Ex. 10 | avant | 32,6 | 480 | 3,4 | - | 19 | -0,7 | -3,9 | - |
| | après | 32,9 | 482 | 3,0 | 1,2 | 18,5 | -1,2 | -3,7 | 0,9 |

Cet empilement au tantale présente donc des variations optiques limitées après trempe, similaires à celles obtenues avec des couches en NbN notamment. On obtient le même avantage en utilisant cette fois du nitrure de tantale.

On peut aussi envisager d'utiliser comme couche fonctionnelle du molybdène, qui permet d'obtenir un couleur plus bleue en réflexion extérieure.

En conclusion, les vitrages de protection solaire selon l'invention sont très avantageux pour équiper des bâtiments, sans exclure des applications dans l'automobile et tous véhicules : les vitres latérales, arrière, le toit-auto, qui peuvent d'ailleurs présenter des revêtements émaillés. Avec un empilement de couches fixé, notamment selon les valeurs de T_{L} et T_{E} que l'on recherche, on peut ainsi, sans avoir à le modifier, fabriquer des vitrages pour la vision qui ne sont pas destinés à subir des traitements thermiques ou qui doivent être bombés/trempés/recuits, fabriquer des allèges en bonne harmonie colorimétrique avec les vitrages visions, qui peuvent être laquées ou émaillées : on peut ainsi standardiser la fabrication des couches interférentielles sur des substrats de grandes dimensions, ce qui est un grand avantage sur le plan industriel.

L'invention a mis au point des vitrages de contrôle solaire trempables, avec des ΔE en réflexion extérieure inférieurs ou égaux à 2, voire à 1,8, ce qui est remarquable.

On peut aussi faire des allèges à couches émaillées, plutôt que laquées, ce qui est industriellement très intéressant également (l'émaillage se faisant pendant le procédé de trempe alors que le laquage nécessite une étape supplémentaire de fabrication).

## Revendications

1. Substrat transparent, muni d'un empilement de couches minces agissant sur le rayonnement solaire, ***caractérisé en ce que*** ledit empilement comprend au moins une couche fonctionnelle à base de molybdène, ladite couche fonctionnelle étant surmontée d'au moins une surcouche à base de nitrure d'aluminium, d'oxynitrure d'aluminium, de nitrure de silicium, ou d'oxynitrure de silicium, ou d'un mélange d'au moins deux de ces composés.

2. Substrat selon la revendication 1, ***caractérisé en ce que*** l'empilement comprend également entre le substrat et la couche fonctionnelle au moins une sous-couche en matériau diélectrique transparent, notamment choisi parmi le nitrure de silicium et/ou d'aluminium, l'oxynitrure de silicium et/ou d'aluminium et l'oxyde de silicium.

3. Substrat selon la revendication 2, **caractérisé en ce que** l'empilement comprend une surcouche à base de nitrure ou d'oxynitrure et une sous-couche à base de nitrure ou d'oxynitrure, l'épaisseur géométrique de la surcouche étant supérieure à celle de la sous-couche.

4. Substrat selon la revendication 3, **caractérisé en ce que** ladite surcouche et ladite sous-couche sont à base de nitrure de silicium.

5. Substrat selon la revendication 3 ou la revendication 4, **caractérisé en ce que** la surcouche est plus épaisse que la sous-couche d'au moins un facteur 1,2, notamment d'au moins un facteur 1,5 à 1,8.

6. Substrat selon l'une des revendications précédentes, **caractérisé en ce que** l'empilement comprend une pluralité de sous-couches entre le substrat et la couche fonctionnelle, notamment une alternance de couches à fort et faible indice comme Si₃N₄/SiO₂ ou Si₃N₄/SiO₂/Si₃N₄.

7. Substrat selon l'une des revendications précédentes, ***caractérisé en* ce que** l'empilement comprend également une couche supplémentaire d'un nitrure d'au moins un métal choisi parmi le niobium, le titane, le zirconium entre la couche fonctionnelle et la surcouche et/ou entre la couche fonctionnelle et le substrat.

8. Substrat selon l'une des revendications précédentes, ***caractérisé en ce que*** la couche fonctionnelle a une épaisseur comprise entre 5 et 50 nm, notamment entre 8 et 40 nm.

9. substrat selon l'une des revendications précédentes, ***caractérisé en ce que*** l'épaisseur de la surcouche est comprise entre 5 et 120 nm, notamment entre 7 et 90 nm.

10. Substrat selon la revendication 7, ***caractérisé en ce que*** la couche supplémentaire de nitrure métallique a une épaisseur comprise entre 2 et 20 nm, notamment entre 5 et 10 nm.

11. Substrat selon l'une des revendications précédentes, ***caractérisé en ce qu'il*** est bombable/trempable et/ou émaillable.

12. Substrat selon l'une des revendications précédentes, ***caractérisé en ce qu'il*** est en verre, clair ou teinté dans la masse, ou en matériau polymère transparent souple ou rigide.

13. Vitrage monolithique ou double vitrage incorporant le substrat selon l'une des revendications précédentes, l'empilement de couches minces, se trouvant de préférence en face 2 et en numérotant les faces des substrats de l'extérieur vers l'intérieur de l'habitacle/du local qu'il équipe, lui conférant un effet de protection vis-à-vis du rayonnement solaire.

14. Vitrage selon la revendication 12, ***caractérisé en ce qu'il*** présente une transmission lumineuse T_{L} de 5 à 55%, notamment de 8 à 45%, et un facteur solaire FS inférieur à 50%, notamment voisin de la valeur de transmission lumineuse.

15. Vitrage selon la revendication 13 ou 14, ***caractérisé en ce qu'il*** est bleu ou vert en réflexion extérieure, côté substrat, avec notamment des valeurs de a* et b* négatives.

16. Substrat selon l'une des revendications 1 à 12, ***caractérisé en ce qu'il*** est au moins partiellement opacifié par un revêtement sous forme d'une laque ou d'un émail.

17. Panneau de parement de façade de type allège incorporant le substrat opacifié selon la revendication 16.
